# EUROPÄISCHE PATENTANMELDUNG

(11) **EP 3 748 308 A1**
(43) Veröffentlichungstag der Anmeldung: **09.12.2020**
(21) Anmeldenummer: 19179100.3
(22) Anmeldetag: 07.06.2019
(51) Int. Cl.: G01F 1/66, F16K 37/00, G01F 15/00

(54) **ULTRASCHALLDURCHFLUSSMESSGERÄT, VERWENDUNG EINES ULTRASCHALLDURCHFLUSSMESSGERÄTES IN EINEM ABSPERRORGAN UND ABSPERRORGAN**

(71) Anmelder: FOCUS-ON V.O.F., 3313 LC Dordrecht (NL)
(72) Erfinder: Boer, Adriaan Hendrik, 3363 CN Sliedrecht (NL)
(74) Vertreter: Gesthuysen Patent- und Rechtsanwälte

(57) **Zusammenfassung**

Beschrieben und dargestellt ist ein Ultraschalldurchflussmessgerät (1) mit wenigstens einem Messrohr (2), mit wenigstens einem ersten Ultraschallwandlerpaar (3, 4) umfassend einen ersten Ultraschallwandler (3) und einen zweiten Ultraschallwandler (4) und wenigstens einem zweiten Ultraschallwandlerpaar (5, 6) umfassend einen dritten Ultraschallwandler (5) und einen vierten Ultraschallwandler (6), wobei jeder Ultraschallwandler (3, 4, 5, 6) als Ultraschallsender und/oder als Ultraschallempfänger ausgestaltet ist,
wobei das erste Ultraschallwandlerpaar (3, 4) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche (9, 10) vorhanden ist und wobei der Verlauf des Ultraschallsignals zwischen dem ersten Ultraschallwandler (3) und dem zweiten Ultraschallwandler (4) einen ersten Signalpfad (7) definiert,
wobei das zweite Ultraschallwandlerpaar (5,6) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche (9, 10) vorhanden ist und wobei der Verlauf des Ultraschallsignals zwischen dem dritten Ultraschallwandler (5) und dem vierten Ultraschallwandler (6) einen zweiten Signalpfad (8) definiert.

## Beschreibung

Die Erfindung geht aus von einem Ultraschalldurchflussmessgerät mit wenigstens einem Messrohr, mit wenigstens einem ersten Ultraschallwandlerpaar umfassend einen ersten Ultraschallwandler und einen zweiten Ultraschallwandler und wenigstens einem zweiten Ultraschallwandlerpaar umfassend einen dritten Ultraschallwandler und einen vierten Ultraschallwandler, wobei jeder Ultraschallwandler als Ultraschallsender und/oder als Ultraschallempfänger ausgestaltet ist,
wobei das erste Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche vorhanden ist und wobei der Verlauf des Ultraschallsignals zwischen dem ersten Ultraschallwandler und dem zweiten Ultraschallwandler einen ersten Signalpfad definiert,
wobei das zweite Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche vorhanden ist und wobei der Verlauf des Ultraschallsignals zwischen dem dritten Ultraschallwandler und dem vierten Ultraschallwandler einen zweiten Signalpfad definiert.

Darüber hinaus betrifft die Erfindung die Verwendung eines Ultraschalldurchflussmessgerätes in einem Absperrorgan, wobei das Absperrorgan einen Strömungskanal und eine in dem Strömungskanal angeordnete Sperrvorrichtung aufweist, wobei die Sperrvorrichtung eine Sperrkörperaufnahme und einen in der Sperrkörperaufnahme beweglichen Sperrkörper aufweist, wobei durch Bewegen des Sperrkörpers in der Sperrkörperaufnahme der Strömungsquerschnitt für das Medium in der Sperrvorrichtung und damit im Strömungskanal veränderbar ist, wobei der Strömungskanal in Strömungsrichtung gesehen vor der Sperrvorrichtung einen Einlaufbereich aufweist.

Zudem betrifft die Erfindung ebenfalls ein Absperrorgan mit einem Ultraschalldurchflussmessgerät, wobei das Absperrorgan einen Strömungskanal und eine in dem Strömungskanal angeordnete Sperrvorrichtung aufweist, wobei die Sperrvorrichtung eine Sperrkörperaufnahme und einen in der Sperrkörperaufnahme beweglichen Sperrkörper aufweist, wobei durch Bewegen des Sperrkörpers in der Sperrkörperaufnahme der Strömungsquerschnitt für das Medium in der Sperrvorrichtung und damit im Strömungskanal veränderbar ist, wobei der Strömungskanal in Strömungsrichtung gesehen vor der Sperrvorrichtung einen Einlaufbereich aufweist.

Die Messung des Durchflusses eines durch ein Messrohr strömenden Mediums mit einem Ultraschalldurchflussmessgerät ist aus dem Stand der Technik bekannt. Ultraschalldurchflussmessgeräte weisen in der Regel ein Messrohr und wenigstens zwei als Ultraschallsender und/oder Ultraschallempfänger ausgestaltete Ultraschallwandler auf, die in Strömungsrichtung (axial bezogen auf die Messrohrachse) voneinander beabstandet an dem Messrohr angeordnet sind. Zur Messung des Durchflusses wird ein Ultraschallsignal entlang des Signalpfades zwischen den Ultraschallwandlern sowohl in Strömungsrichtung als auch entgegengesetzt zur Strömungsrichtung ausgesendet. Aufgrund des Mitführeffektes ergibt sich eine unterschiedliche Laufzeit von den Signalen, die sich entlang eines Signalpfades mit bzw. entgegen der Strömung bewegen. Aus dem Laufzeitunterschied wird die Strömungsgeschwindigkeit und unter Berücksichtigung des Messrohrquerschnittes der Volumendurchfluss bestimmt.

Bekannt sind ebenfalls Ultraschalldurchflussmessgeräte, die mehr als ein Ultraschallwandlerpaar aufweisen, sodass zur Bestimmung des Durchflusses zwei oder mehr Signalpfade ausgewertet werden können.

Beispielsweise offenbart die Druckschrift DE 10 2007 004 936 B4 ein Ultraschalldurchflussmessgerät mit wenigstens zwei Ultraschallwandlerpaaren, wobei die Ultraschallwandler eines jeden Ultraschallwandlerpaares auf einer gemeinsamen Umfangshälfte in Längsrichtung des Messrohrs versetzt zueinander angeordnet sind und der dem jeweiligen Ultraschallwandlerpaar zugeordnete Ultraschallreflektor auf der anderen Umfangshälfte in Längsrichtung des Messrohrs gesehen zwischen den beiden Ultraschallwandlern angeordnet ist, sodass ein von einem Ultraschallwandler eines Ultraschallwandlerpaares ausgesandtes Ultraschallsignal längs eines V-förmigen Signalpfads über den dem Ultraschallwandlerpaar zugeordneten Ultraschallreflektor zu dem anderen Ultraschallwandler des Ultraschallwandlerpaares gelangt, wobei das erste Ultraschallwandlerpaar und der zweite Ultraschallreflektor auf der einen Umfangshälfte und das zweite Ultraschallwandlerpaar und der erste Ultraschallreflektor auf der anderen Umfangshälfte angeordnet sind.

Die Druckschrift EP 0 639 776 A1 offenbart ebenfalls ein Ultraschalldurchflussmessgerät mit einer Mehrzahl von Ultraschallwandlerpaaren, wobei die Ultraschallwandlerpaare derart an dem Messrohr angeordnet sind, dass das strömende Medium mittels mehrerer Ultraschallsignale, die einen unterschiedlichen Grad an Empfindlichkeit in Bezug auf eine Verwirbelung des Strömungsprofils besitzen, durchlaufen wird.

Zudem ist aus der Druckschrift DE 10 2013 218 827 A1 bekannt, Ultraschalldurchflussmessgeräte zur Durchflussmessung am oder in dem Gehäuse eines Absperrorgans vorzusehen, sodass eine Regelung des Volumen- oder Massestroms basierend auf dem gemessenen Durchfluss erfolgen kann.

Insbesondere in Absperrorganen aber auch in anderen Anwendungsbereichen besteht häufig das Problem, dass Biegungen oder Querschnittsveränderungen des Messrohrs Unregelmäßigkeiten im Strömungsprofil verursachen, die an der Messstelle zu Ungenauigkeiten der Durchflussmessung führen. Im Detail erzeugen beispielsweise im zu vermessenden strömenden Medium vorhandene Wirbel radiale und tangentiale Geschwindigkeitskomponenten, die die Messung der Geschwindigkeit des strömenden Mediums verfälschen. Problematisch ist insbesondere, wenn die Messstelle kurz vor oder hinter oder im Bereich von solchen, eine Störung des Strömungsprofils verursachenden Bereichen, angeordnet ist.

Ausgehend von dem dargelegten Stand der Technik ist es daher Aufgabe der Erfindung ein Ultraschalldurchflussmessgerät anzugeben, dass insbesondere auch in kritischen Anwendungsbereichen eine besonders zuverlässige Durchflussmessung erlaubt. Zudem ist es Aufgabe der Erfindung die Verwendung eines solchen Durchflussmessgerätes in einem Absperrorgan und ein entsprechendes Absperrorgan anzugeben.

Gemäß einer ersten Lehre der vorliegenden Erfindung wird die zuvor dargelegte Aufgabe durch ein eingangs genanntes Ultraschalldurchflussmessgerät dadurch gelöst, der Signalverlauf des ersten Signalpfads in Bezug auf die Messrohrachse eine erste Rotationsrichtung aufweist und dass der Signalverlauf des zweiten Signalpfads eine zweite Rotationsrichtung aufweist, wobei die zweite Rotationsrichtung der ersten Rotationsrichtung entgegengesetzt ist und dass der erste Signalpfad und der zweite Signalpfad wenigstens eine gemeinsame Reflexionsfläche aufweisen.

Erfindungsgemäß wurde erkannt, dass strömende Medien, die beispielsweise die Durchflussmessung störende Verwirbelungen aufweisen, besonders zuverlässig dadurch vermessen werden können, dass das Medium durch mindestens zwei Signalpfade erfasst wird, die das Medium in unterschiedlichen Rotationsrichtungen in Bezug auf die Messrohrachse durchlaufen. Fehler verursachende radiale oder tangentiale Geschwindigkeitskomponenten können auf diese Weise besonders vorteilhaft herausgefiltert werden.

Die Reflexionsfläche bzw. die Reflexionsflächen kann bzw. können sowohl durch in das Messrohr eingebrachte Reflexionselemente ausgebildet sein und/oder das Messrohr kann im Bereich wenigstens einer Reflexionsfläche entsprechend abgeflacht sein. Je nach Ausgestaltung der Signalpfade kann die Reflexionsfläche bzw. können die Reflexionsflächen in Bezug auf die Innenwand des Messrohrs wenigstens teilweise rückversetzt sein und/oder in das Messrohrinnere hineinragen und/oder bündig mit der Messrohrinnenwand ausgebildet sein.

Erfindungsgemäß weisen weiterhin der erste Signalpfad und der zweite Signalpfad wenigstens eine gemeinsame Reflexionsfläche auf. Auf diese Weise kann die Anordnung aus wenigstens zwei Ultraschallwandlerpaaren zum einen auch in engen Platzverhältnissen eingesetzt werden und zum anderen ist eine solche Anordnung besonders leicht herzustellen, da die Anzahl an zu fertigenden Reflexionsflächen minimiert ist.

Zudem weist das Ultraschalldurchflussmessgerät eine Steuer- und Auswerteeinheit auf, die den Durchfluss eines strömenden Mediums basierend auf wenigstens den zwei Ultraschallsignalen bestimmt.

Gemäß einer vorteilhaften Weiterbildung weist das Messrohr eine Messrohrachse auf, wobei durch die Messrohrachse und einer Senkrechten zur Messrohrachse, die das Messrohr in axialer Draufsicht in eine erste Hälfte und eine zweite Hälfte unterteilt, eine Spiegelebene definiert ist und wobei der zweite Signalpfad im Wesentlichen einer Spiegelung des ersten Signalpfades an der Spiegelebene entspricht. Auf diese Weise kann gewährleistet werden, dass das Strömungsprofil symmetrisch in zwei entgegengesetzten Rotationsrichtungen abgetastet wird. Die Messrohrachse ist gemäß einer Ausgestaltung des Durchflussmessgeräts zumindest abschnittsweise gebogen ausgebildet. Dementsprechend ist in dieser Ausgestaltung auch das Messrohr zumindest abschnittsweise gebogen ausgebildet.

Zudem ist vorteilhaft, wenn der erste Signalpfad wenigstens zwei Reflexionen aufweist, wobei wenigstens zwei Reflexionsflächen vorhanden sind, sodass der Signalverlauf in axialer Draufsicht einem geschlossenen Signalpfad, vorzugsweise in Form eines Dreiecks, entspricht und wenn der zweite Signalpfad wenigstens zwei Reflexionen aufweist, wobei wenigstens zwei Reflexionsflächen vorhanden sind, sodass der Signalverlauf in axialer Draufsicht einem geschlossenen Signalpfad, vorzugsweise in Form eines Dreiecks, entspricht. Diese Ausgestaltung weist den Vorteil auf, dass das Strömungsprofil im Wesentlichen zirkular abgetastet wird, sodass ein besonders großer Bereich des Strömungsprofils erfasst werden kann.

Neben der Form eines Dreiecks sind ebenfalls weitere geschlossene Formen der Signalpfade denkbar, beispielsweise können die Signalpfade in axialer Draufsicht die Form eines Vierecks oder eines Fünfecks aufweisen. Hierdurch ist es möglich, auch weitere außen liegende Randbereiche des Strömungsprofils zu vermessen.

Alternativ zu einem geschlossenen Pfadverlauf sind gemäß einer nächsten Ausgestaltung des Ultraschalldurchflussmessgeräts der erste Signalpfad und der zweite Signalpfad derart ausgebildet, dass der jeweilige Signalverlauf in axialer Draufsicht einem offenen Pfadverlauf entspricht.

Gemäß einer nächsten Ausgestaltung sind der erste Signalpfad und der zweite Signalpfad in axialer Draufsicht auf das Messrohr im Wesentlichen deckungsgleich ausgebildet. Besonders bevorzugt sind der erste Signalpfad und der zweite Signalpfad in axialer Draufsicht auf das Messrohr im Wesentlichen deckend übereinander angeordnet. Hierdurch kann gewährleistet werden, dass jeder einzelne Pfadabschnitt des ersten und des zweiten Signalpfades in den einander entgegengesetzten Rotationsrichtungen durchlaufen wird, wodurch im Ergebnis eine besonders hohe Messgenauigkeit erreicht wird.

Besonders vorteilhaft ist es ebenfalls, wenn die Ultraschallwandler des ersten Ultraschallwandlerpaars den jeweils entsprechenden Ultraschallwandlern des zweiten Ultraschallwandlerpaars gegenüberliegend, insbesondere symmetrisch in Bezug auf die Spiegelebene, am Messrohr angeordnet sind.

Grundsätzlich ist eine Anordnung vorteilhaft, bei der das erste Ultraschallwandlerpaar und das zweite Ultraschallwandlerpaar innerhalb desselben Messrohrabschnittes angeordnet sind. Eine solche Anordnung eignet sich insbesondere für den Einsatz in kurzen Messrohren.

Beispielsweise sind der erste Ultraschallwandler des ersten Ultraschallwandlerpaars und der dritte Ultraschallwandlerpaars des zweiten Ultraschallwandlerpaars auf dem Umfang einer ersten Messrohrquerschnittsfläche angeordnet und weiterhin sind der zweite Ultraschallwandler des ersten Ultraschallwandlerpaars und der vierte Ultraschallwandler des zweiten Ultraschallwandlerpaars auf dem Umfang einer zweiten Messrohrquerschnittsfläche angeordnet.

Gemäß einer nächsten Ausgestaltung weist das Messrohr eine Messrohrquerschnittsfläche auf, wobei sich im Verlauf des ersten Signalpfades und des zweiten Signalpfades die Form und/oder die Größe der Messrohrquerschnittsfläche ändert. Dabei sind vorzugsweise die Ultraschallwandler und die wenigstens eine gemeinsame Reflexionsfläche derart angeordnet, dass die Vermessung des Mediums in den Bereichen des Messrohrs, die eine Verbreiterung des Messrohrquerschnittes aufweisen, vermieden werden.

Besonders bevorzugt weist das Messrohr im Verlauf des ersten Signalpfades und des zweiten Signalpfades eine Querschnittsverkleinerung auf. Alternativ kann das Messrohr im Verlauf des ersten Signalpfades und des zweiten Signalpfades auch eine Querschnittsvergrößerung aufweisen.

Gemäß einer Ausgestaltung ist die Messrohrquerschnittsfläche im Bereich des ersten Ultraschallwandlers und des dritten Ultraschallwandlers im Wesentlichen kreisförmig ausgebildet und im Bereich des zweiten Ultraschallwandlers und des vierten Ultraschallwandlers ist die Messrohrquerschnittsfläche im Wesentlichen oval ausgebildet.

Die beiden Ultraschallwandlerpaare sind dabei derart an dem Messrohr angeordnet, dass eine Wirbelbildung innerhalb des strömenden Mediums aufgrund der Veränderung des Messrohrs eine möglichst geringe Auswirkung zeigt und gleichzeitig die Bestimmung der Geschwindigkeit eines turbulenten bzw. laminaren Strömungsprofils einen möglichst geringen Fehler aufweist.

Eine nächste Ausgestaltung zeichnet sich dadurch aus, dass die Ultraschallwandler derart angeordnet sind, dass zumindest der erste Teilabschnitt des ersten Signalpfades und des zweiten Signalpfades das strömende Medium im Bereich r = 0,5 R oder r > 0,5 R oder r > 0,3 R vermessen, wobei R den Radius der Messrohrquerschnittsfläche im Bereich des Messrohreinlasses vor dem ersten und dem dritten Ultraschallwandler bezeichnet.

Vorzugsweise ist der letzte Teilabschnitt des ersten Signalpfades und des zweiten Signalpfades im Bereich r = 0,5 R oder r > 0,5 R oder r > 0,3 R angeordnet, wobei R den Radius der Messrohrquerschnittsfläche im Bereich des Messrohreinlasses bezeichnet.

Gemäß einer zweiten Lehre der vorliegenden Erfindung wird die eingangs genannte Aufgabe durch eine eingangs dargelegte Verwendung eines Ultraschalldurchflussmessgeräts in einem Absperrorgan dadurch gelöst, dass das Ultraschalldurchflussmessgerät wenigstens ein Messrohr, wenigstens ein erstes Ultraschallwandlerpaar umfassend einen ersten Ultraschallwandler und einen zweiten Ultraschallwandler und wenigstens ein zweites Ultraschallwandlerpaar umfassend einen dritten Ultraschallwandler und einen vierten Ultraschallwandler aufweist, wobei jeder Ultraschallwandler als Ultraschallsender und/oder als Ultraschallempfänger ausgestaltet ist,
dass das erste Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche vorhanden ist und wobei der Verlauf des Ultraschallsignals zwischen dem ersten Ultraschallwandler und dem zweiten Ultraschallwandler einen ersten Signalpfad definiert,
dass das zweite Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche vorhanden ist und wobei der Verlauf des Ultraschallsignals zwischen dem dritten Ultraschallwandler und dem vierten Ultraschallwandler einen zweiten Signalpfad definiert,
dass das Messrohr des Ultraschalldurchflussmessgerätes zumindest als Teil des Strömungskanals ausgebildet ist und
dass der Signalverlauf des ersten Signalpfads in Bezug auf die Messrohrachse eine erste Rotationsrichtung aufweist und dass der Signalverlauf des zweiten Signalpfads eine zweite Rotationsrichtung aufweist, wobei die zweite Rotationsrichtung der ersten Rotationsrichtung entgegengesetzt ist und
dass der erste Signalpfad und der zweite Signalpfad wenigstens eine gemeinsame Reflexionsfläche aufweisen.

Gemäß einer besonders bevorzugten Ausbildung ist das Ultraschalldurchflussmessgerät nach einer der zuvor beschriebenen Ausgestaltungen ausgebildet.

Die erfindungsgemäße Ausgestaltung des Ultraschalldurchflussmessgeräts gewährleistet insbesondere bei verschiedenen Stellungen des beweglichen Sperrkörpers und insofern bei Veränderung des Strömungsquerschnittes im Strömungskanal eine zuverlässige Bestimmung des Durchflusses eines strömenden Mediums, wodurch ebenfalls die Funktionsweise des Absperrorgans verbessert werden kann.

Gemäß einer dritten Lehre der vorliegenden Erfindung wird die eingangs dargelegte Aufgabe durch ein eingangs beschriebenes Absperrorgan mit einem Ultraschalldurchflussmessgerät, dadurch gelöst, dass
dass das Ultraschalldurchflussmessgerät wenigstens ein Messrohr, wenigstens ein erstes Ultraschallwandlerpaar umfassend einen ersten Ultraschallwandler und einen zweiten Ultraschallwandler und wenigstens ein zweites Ultraschallwandlerpaar umfassend einen dritten Ultraschallwandler und einen vierten Ultraschallwandler aufweist, wobei jeder Ultraschallwandler als Ultraschallsender und/oder als Ultraschallempfänger ausgestaltet ist,
dass das erste Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche vorhanden ist und wobei der Verlauf des Ultraschallsignals zwischen dem ersten Ultraschallwandler und dem zweiten Ultraschallwandler einen ersten Signalpfad definiert,
dass das zweite Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche vorhanden ist und wobei der Verlauf des Ultraschallsignals zwischen dem dritten Ultraschallwandler und dem vierten Ultraschallwandler einen zweiten Signalpfad definiert,
dass das Messrohr des Ultraschalldurchflussmessgerätes zumindest als Teil des Strömungskanals ausgebildet ist und
dass der Signalverlauf des ersten Signalpfads in Bezug auf die Messrohrachse eine erste Rotationsrichtung aufweist und dass der Signalverlauf des zweiten Signalpfads eine zweite Rotationsrichtung aufweist, wobei die zweite Rotationsrichtung der ersten Rotationsrichtung entgegengesetzt ist und
dass der erste Signalpfad und der zweite Signalpfad wenigstens eine gemeinsame Reflexionsfläche aufweisen.

Besonders bevorzugt ist das Ultraschalldurchflussmessgerät nach einer der oben beschriebenen Ausgestaltungen ausgebildet. Bezüglich

Im Einzelnen gibt es nun eine Vielzahl von Möglichkeiten, das erfindungsgemäße Ultraschalldurchflussmessgerät, die erfindungsgemäße Verwendung und das erfindungsgemäße Absperrorgan auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: eine erste erfindungsgemäße Anordnung eines ersten Ultraschallwandlerpaares und eines zweiten Ultraschallwandlerpaares,
- Fig. 2: ein erstes Ausführungsbeispiel eines erfindungsgemäßen Ultraschalldurchflussmessgeräts, einer Verwendung und eines erfindungsgemäßen Absperrorgans,
- Fig. 3: das in Fig. 2 dargestellte Ausführungsbeispiel in einer Ansicht von oben,
- Fig. 4: das in Fig. 3 dargestellte Ausführungsbeispiel in Seitenansicht,
- Fig. 5: das in Fig. 3 dargestellte Ausführungsbeispiel in axialer Draufsicht und,
- Fig. 6: ein weiteres Ausführungsbeispiel einer Anordnung in einem erfindungsgemäßen Absperrorgan.

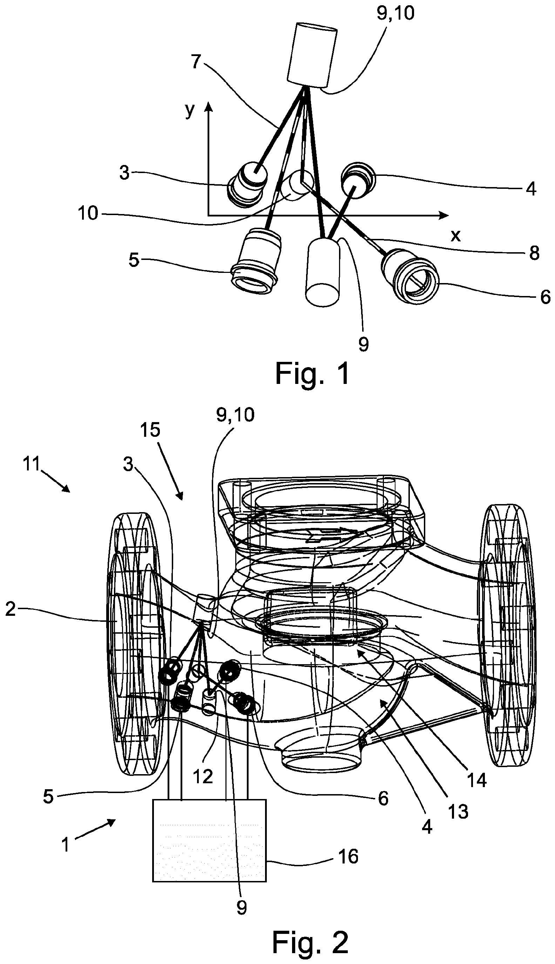

Fig. 1 zeigt eine erste Anordnung eines ersten Ultraschallwandlerpaares 3, 4 mit einem ersten Ultraschallwandler 3 und einem zweiten Ultraschallwandler 4 und eines zweiten Ultraschallwandlerpaares 5,6 mit einem dritten Ultraschallwandler 5 und einem vierten Ultraschallwandler 6, wobei jeder Ultraschallwandler 3, 4, 5, 6 als Ultraschallsender und als Ultraschallempfänger ausgestaltet ist. Die dargestellte Anordnung eignet sich für den Einsatz in einem erfindungsgemäßen Ultraschalldurchflussmessgerät 1.

Zwischen dem ersten Ultraschallwandlerpaar 3, 4 ist in der dargestellten Anordnung der erste Signalpfad 7 ausgebildet, der zweite Signalpfad 8 verläuft zwischen dem zweiten Ultraschallwandlerpaar 5, 6. Dabei entspricht der zweite Signalpfad 8 einer Spiegelung des ersten Signalpfades 7 an der Spiegelebene, die durch die Achsen X und Y aufgespannt wird (XY-Ebene).

Der erste Signalpfad 7 weist drei Teilabschnitte, die durch Reflexionsflächen 9, 10 voneinander getrennt sind, auf. Zudem weist auch der zweite Signalpfad 8 drei Teilabschnitte auf, die durch Reflexionsflächen 9, 10 voneinander getrennt sind. Eine Reflexionsfläche 9, 10 ist in der dargestellten Anordnung den Signalpfaden 7 und 8 gemeinsam. Damit weist die dargestellte Anordnung den Vorteil auf, dass sie aufgrund der geringen Anzahl an Reflexionsflächen besonders leicht herzustellen ist und sich weiterhin besonders für den Einsatz in kurzen Messrohren eignet.

Im Betrieb bezeichnet die X-Achse eine mögliche Strömungsrichtung des Mediums, sodass die Ultraschallwandlerpaare 3, 4 und 5, 6 derart angeordnet sind, dass sie bei dem Einsatz in einem erfindungsgemäßen Ultraschalldurchflussmessgerät 1 das strömende Medium in entgegengesetzten Rotationsrichtungen (in axialer Sicht) durchlaufen.

Diese Anordnung weist damit den Vorteil auf, dass vorhandene Verwirbelungen, die fiktive Geschwindigkeitskomponenten verursachen, besonders effektiv dadurch herausgefiltert werden können, dass sie in entgegengesetzten Richtungen durchlaufen werden.

Fig. 2 zeigt die Anwendung der in Fig. 1 dargestellten Anordnung des ersten Ultraschallwandlerpaares 3, 4 und des zweiten Ultraschallwandlerpaares 5, 6 in einem Ultraschalldurchflussmessgerät 1 sowie die Verwendung des Ultraschalldurchflussmessgeräts 1 in einem Absperrorgan 11.

Das Absperrorgan 11 weist einen Strömungskanal 12 und eine in dem Strömungskanal 12 angeordnete Sperrvorrichtung 13 auf, wobei die Sperrvorrichtung 13 eine Sperrkörperaufnahme und einen in der Sperrkörperaufnahme beweglichen Sperrkörper 14 aufweist, wobei durch Bewegen des Sperrkörpers 14 in der Sperrkörperaufnahme der Strömungsquerschnitt für das Medium in der Sperrvorrichtung 13 und damit im Strömungskanal 12 veränderbar ist, wobei der Strömungskanal 12 in Strömungsrichtung gesehen vor der Sperrvorrichtung 13 einen Einlaufbereich 15 aufweist.

Im dargestellten Absperrorgan 11 ist der Strömungskanal 12, im Detail der Einlaufbereich 15 als Messrohr 2 des Ultraschalldurchflussmessgerätes 1 ausgebildet. Das erste Ultraschallwandlerpaar 3, 4 und das zweite Ultraschallwandlerpaar 5, 6 sind im Einlaufbereich 15 an dem Strömungskanal 12 entsprechend der zu Fig. 1 beschriebenen Anordnung angebracht. Zudem ist eine Steuer- und Auswerteeinheit 16 vorhanden, die im Betrieb die Ultraschallwandler 3, 4, 5, 6 ansteuert und aus den Laufzeiten der Ultraschallsignale den Durchfluss des Mediums bestimmt.

Das Messrohr 2 bzw. der Strömungskanal 12 weist im Einlaufbereich 15, also im Bereich des ersten und des zweiten Ultraschallwandlerpaares 3, 4, 5, 6 eine Änderung der Form der Messrohrquerschnittsfläche und der Größe der Messrohrquerschnittsfläche auf.

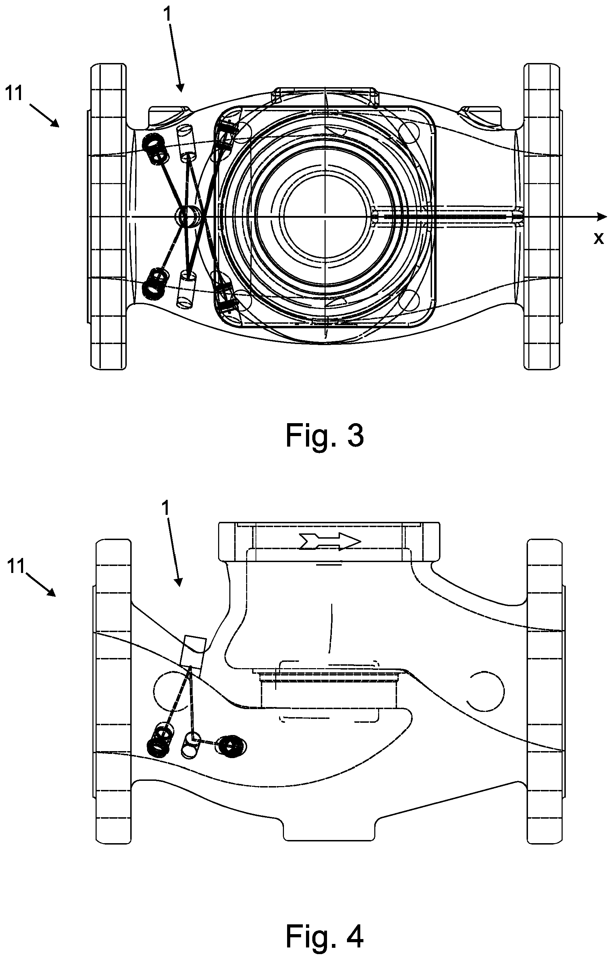

Die Fig. 3 bis 5 zeigen andere Ansichten der zuvor beschriebenen Anordnung. Die in Fig. 3 gezeigte Ansicht des Absperrorgans 11 von oben zeigt besonders anschaulich die gespiegelte Ausgestaltung des zweiten Signalpfades 8 in Bezug auf den ersten Signalpfad 7 an der Spiegelebene. In der Darstellung entspricht die Messrohrachse der X-Achse, die Y-Achse ragt senkrecht aus der Zeichenebene heraus.

Fig. 4 zeigt das in Fig 2 beschriebene Ausführungsbeispiel in Seitenansicht.

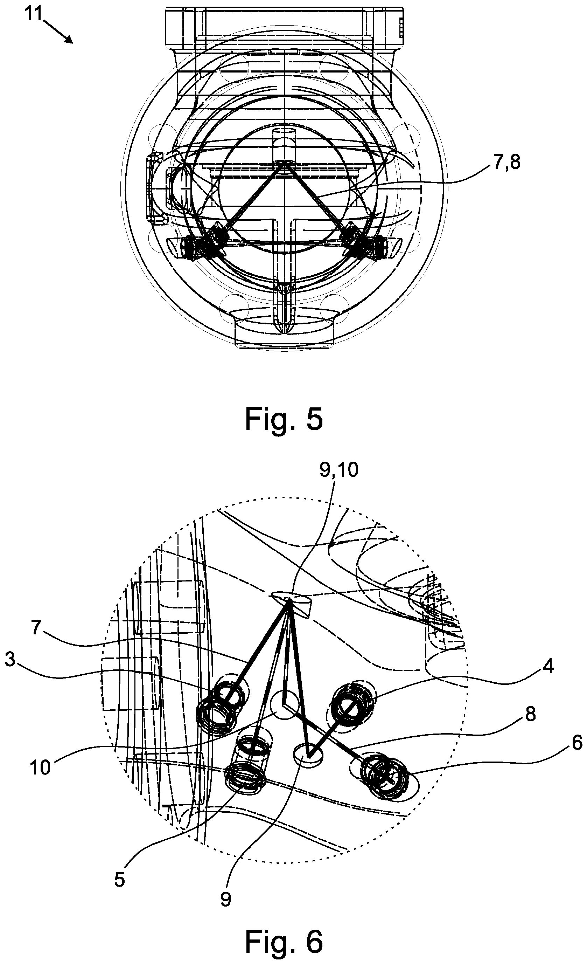

Zudem zeigt Fig. 5 in axialer Draufsicht auf das Messrohr 2 die kongruente Ausgestaltung des ersten Signalpfades 7 und des zweiten Signalpfades 8. Beide Signalpfade 7, 8 bilden in axialer Draufsicht die geschlossene Form eines Dreiecks, wobei die Signalpfade 7 und 8 im Wesentlichen deckend übereinander liegen.

Fig. 6 zeigt ein weiteres Ausführungsbeispiel eines erfindungsgemäßen Ultraschalldurchflussmessgeräts 1 in einem Absperrorgan 11, wobei im Unterschied zu den in den Fig. 1 bis 8 gezeigten Darstellungen die Reflexionsflächen 9, 10 nicht durch separat eingebrachte Reflexionselemente, sondern durch eine Bearbeitung des Messrohrs 2 bzw. des Strömungskanals 12 ausgebildet sind.

Im Ergebnis zeigen sämtliche Figuren Ausführungsbeispiele der Erfindung, wobei insbesondere durch die erfindungsgemäße Anordnung der Ultraschallwandlerpaare der Durchfluss auch in anspruchsvollen Situationen, in denen das Strömungsprofil aufgrund einer Veränderung des Messrohrs stark gestört ist, besonders zuverlässig bestimmt werden kann.

### Bezugszeichen

- 1: Ultraschalldurchflussmessgerät
- 2: Messrohr
- 3: Ultraschallwandler
- 4: Ultraschallwandler
- 5: Ultraschallwandler
- 6: Ultraschallwandler
- 7: erster Signalpfad
- 8: zweiter Signalpfad
- 9: Reflexionsfläche
- 10: Reflexionsfläche
- 11: Absperrorgan
- 12: Strömungskanal
- 13: Sperrvorrichtung
- 14: Sperrkörper
- 15: Einlaufbereich
- 16: Steuer- und Auswerteeinheit

## Patentansprüche

1. Ultraschalldurchflussmessgerät (1) mit wenigstens einem Messrohr (2), mit wenigstens einem ersten Ultraschallwandlerpaar (3, 4) umfassend einen ersten Ultraschallwandler (3) und einen zweiten Ultraschallwandler (4) und wenigstens einem zweiten Ultraschallwandlerpaar (5, 6) umfassend einen dritten Ultraschallwandler (5) und einen vierten Ultraschallwandler (6), wobei jeder Ultraschallwandler (3, 4, 5, 6) als Ultraschallsender und/oder als Ultraschallempfänger ausgestaltet ist,
wobei das erste Ultraschallwandlerpaar (3, 4) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche (9, 10) vorhanden ist und wobei der Verlauf des Ultraschallsignals zwischen dem ersten Ultraschallwandler (3) und dem zweiten Ultraschallwandler (4) einen ersten Signalpfad (7) definiert,
wobei das zweite Ultraschallwandlerpaar (5,6) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche (9, 10) vorhanden ist und wobei der Verlauf des Ultraschallsignals zwischen dem dritten Ultraschallwandler (5) und dem vierten Ultraschallwandler (6) einen zweiten Signalpfad (8) definiert,
**dadurch gekennzeichnet,**
**dass** der Signalverlauf des ersten Signalpfads (7) in Bezug auf die Messrohrachse eine erste Rotationsrichtung aufweist und dass der Signalverlauf des zweiten Signalpfads (8) eine zweite Rotationsrichtung aufweist, wobei die zweite Rotationsrichtung der ersten Rotationsrichtung entgegengesetzt ist und
**dass** der erste Signalpfad (7) und der zweite Signalpfad (8) wenigstens eine gemeinsame Reflexionsfläche (9, 10) aufweisen.

2. Ultraschalldurchflussmessgerät nach Anspruch 1, **dadurch gekennzeichnet, dass** das Messrohr (2) eine Messrohrachse aufweist und dass durch die Messrohrachse und einer Senkrechten zur Messrohrachse, die das Messrohr (2) in axialer Draufsicht in eine erste Hälfte und eine zweite Hälfte unterteilt, eine Spiegelebene definiert ist und dass der zweite Signalpfad (8) im Wesentlichen einer Spiegelung des ersten Signalpfades (7) an der Spiegelebene entspricht.

3. Ultraschalldurchflussmessgerät (1) nach einem der Ansprüche 1 oder 2, **dadurch gekennzeichnet, dass** der erste Signalpfad (7) wenigstens zwei Reflexionen aufweist, wobei wenigstens zwei Reflexionsflächen (9, 10) vorhanden sind, sodass der Signalverlauf in axialer Draufsicht einem geschlossenen Signalpfad, vorzugsweise in Form eines Dreiecks, entspricht und dass der zweite Signalpfad (8) wenigstens zwei Reflexionen aufweist, wobei wenigstens zwei Reflexionsflächen (9, 10) vorhanden sind, sodass der Signalverlauf in axialer Draufsicht einem geschlossenen Signalpfad, vorzugsweise in Form eines Dreiecks, entspricht.

4. Ultraschalldurchflussmessgerät nach einem der Ansprüche 1 bis 3, **dadurch gekennzeichnet, dass** der erste Signalpfad (7) und der zweite Signalpfad (8) in axialer Draufsicht auf das Messrohr (2) im Wesentlichen deckungsgleich sind.

5. Ultraschalldurchflussmessgerät (1) nach einem der Ansprüche 1 bis 4, **dadurch gekennzeichnet, dass** die Ultraschallwandler (3, 4) des ersten Ultraschallwandlerpaars (3, 4) den jeweils entsprechenden Ultraschallwandlern (5, 6) des zweiten Ultraschallwandlerpaars (5, 6) im Wesentlichen gegenüberliegend am Messrohr (2) angeordnet sind.

6. Ultraschalldurchflussmessgerät (1) nach einem der Ansprüche 1 bis 5, **dadurch gekennzeichnet, dass** das Messrohr (2) eine Messrohrquerschnittsfläche aufweist und dass sich im Verlauf des ersten Signalpfades (7) und des zweiten Signalpfades (8) die Form und/oder die Größe der Messrohrquerschnittsfläche ändert, wobei vorzugsweise die Ultraschallwandler (3, 4, 5, 6) und die wenigstens eine gemeinsame Reflexionsfläche (9, 10) derart angeordnet sind, dass die Vermessung des Mediums in den Bereichen des Messrohrs (2), die eine Verbreiterung des Messrohrquerschnittes aufweisen, vermieden wird.

7. Ultraschalldurchflussmessgerät (1) nach Anspruch 6, **dadurch gekennzeichnet, dass** das Messrohr (2) im Verlauf des ersten Signalpfades (7) und des zweiten Signalpfades (8) eine Querschnittsverkleinerung oder eine Querschnittsvergrößerung aufweist.

8. Ultraschalldurchflussmessgerät (1) nach Anspruch 6 oder 7, **dadurch gekennzeichnet, dass** die Ultraschallwandler (3, 4, 5, 6) derart angeordnet sind, dass zumindest der erste Teilabschnitt des ersten Signalpfades (7) und des zweiten Signalpfades (8) das strömende Medium im Bereich r = 0,5 R oder r > 0,5 R oder r > 0,3 R vermessen, wobei R den Radius der Messrohrquerschnittsfläche im Bereich des Messrohreinlasses vor dem ersten Ultraschallwandler (3) und dem dritten Ultraschallwandler (5) bezeichnet.

9. Verwendung eines Ultraschalldurchflussmessgerätes (1) in einem Absperrorgan (11), wobei das Absperrorgan (11) einen Strömungskanal (12) und eine in dem Strömungskanal (12) angeordnete Sperrvorrichtung (13) aufweist, wobei die Sperrvorrichtung (13) eine Sperrkörperaufnahme und einen in der Sperrkörperaufnahme beweglichen Sperrkörper (14) aufweist, wobei durch Bewegen des Sperrkörpers (14) in der Sperrkörperaufnahme der Strömungsquerschnitt für das Medium in der Sperrvorrichtung (13) und damit im Strömungskanal (12) veränderbar ist, wobei der Strömungskanal (12) in Strömungsrichtung gesehen vor der Sperrvorrichtung (13) einen Einlaufbereich (15) aufweist,
**dadurch gekennzeichnet,**
**dass** das Ultraschalldurchflussmessgerät (1) wenigstens ein Messrohr (2), wenigstens ein erstes Ultraschallwandlerpaar (3, 4) umfassend einen ersten Ultraschallwandler (3) und einen zweiten Ultraschallwandler (4) und wenigstens ein zweites Ultraschallwandlerpaar (5, 6) umfassend einen dritten Ultraschallwandler (5) und einen vierten Ultraschallwandler (6) aufweist, wobei jeder Ultraschallwandler (3, 4, 5, 6) als Ultraschallsender und/oder als Ultraschallempfänger ausgestaltet ist,
**dass** das erste Ultraschallwandlerpaar (3, 4) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche (9, 10) vorhanden ist und wobei der Verlauf des Ultraschallsignals zwischen dem ersten Ultraschallwandler (3) und dem zweiten Ultraschallwandler (4) einen ersten Signalpfad (7) definiert,
**dass** das zweite Ultraschallwandlerpaar (5,6) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche (9, 10) vorhanden ist und wobei der Verlauf des Ultraschallsignals zwischen dem dritten Ultraschallwandler (5) und dem vierten Ultraschallwandler (6) einen zweiten Signalpfad (8) definiert,
**dass** das Messrohr (2) des Ultraschalldurchflussmessgerätes (1) zumindest als Teil des Strömungskanals (12) ausgebildet ist und
**dass** der Signalverlauf des ersten Signalpfads (7) in Bezug auf die Messrohrachse eine erste Rotationsrichtung aufweist und dass der Signalverlauf des zweiten Signalpfads (8) eine zweite Rotationsrichtung aufweist, wobei die zweite Rotationsrichtung der ersten Rotationsrichtung entgegengesetzt ist und
**dass** der erste Signalpfad (7) und der zweite Signalpfad (8) wenigstens eine gemeinsame Reflexionsfläche (9, 10) aufweisen.

10. Verwendung nach Anspruch 9, **dadurch gekennzeichnet, dass** das Ultraschalldurchflussmessgerät (1) nach einem der Ansprüche 1 bis 8 ausgebildet ist.

11. Absperrorgan (11) mit einem Ultraschalldurchflussmessgerät (1), wobei das Absperrorgan (11) einen Strömungskanal (12) und eine in dem Strömungskanal (12) angeordnete Sperrvorrichtung (13) aufweist, wobei die Sperrvorrichtung (13) eine Sperrkörperaufnahme und einen in der Sperrkörperaufnahme beweglichen Sperrkörper (14) aufweist, wobei durch Bewegen des Sperrkörpers (14) in der Sperrkörperaufnahme der Strömungsquerschnitt für das Medium in der Sperrvorrichtung (13) und damit im Strömungskanal (12) veränderbar ist, wobei der Strömungskanal (12) in Strömungsrichtung gesehen vor der Sperrvorrichtung (13) einen Einlaufbereich (15) aufweist,
**dadurch gekennzeichnet,**
**dass** das Ultraschalldurchflussmessgerät (1) wenigstens ein Messrohr (2), wenigstens ein erstes Ultraschallwandlerpaar (3, 4) umfassend einen ersten Ultraschallwandler (3) und einen zweiten Ultraschallwandler (4) und wenigstens ein zweites Ultraschallwandlerpaar (5, 6) umfassend einen dritten Ultraschallwandler (5) und einen vierten Ultraschallwandler (6) aufweist, wobei jeder Ultraschallwandler (3, 4, 5, 6) als Ultraschallsender und/oder als Ultraschallempfänger ausgestaltet ist,
**dass** das erste Ultraschallwandlerpaar (3, 4) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche (9, 10) vorhanden ist und wobei der Verlauf des Ultraschallsignals zwischen dem ersten Ultraschallwandler (3) und dem zweiten Ultraschallwandler (4) einen ersten Signalpfad (7) definiert,
**dass** das zweite Ultraschallwandlerpaar (5,6) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion empfängt, wobei wenigstens eine Reflexionsfläche (9, 10) vorhanden ist und wobei der Verlauf des Ultraschallsignals zwischen dem dritten Ultraschallwandler (5) und dem vierten Ultraschallwandler (6) einen zweiten Signalpfad (8) definiert,
**dass** das Messrohr (2) des Ultraschalldurchflussmessgerätes (1) zumindest als Teil des Strömungskanals (12) ausgebildet ist und
**dass** der Signalverlauf des ersten Signalpfads (7) in Bezug auf die Messrohrachse eine erste Rotationsrichtung aufweist und dass der Signalverlauf des zweiten Signalpfads (8) eine zweite Rotationsrichtung aufweist, wobei die zweite Rotationsrichtung der ersten Rotationsrichtung entgegengesetzt ist und
**dass** der erste Signalpfad (7) und der zweite Signalpfad (8) wenigstens eine gemeinsame Reflexionsfläche (9, 10) aufweisen.

12. Absperrorgan (11) nach Anspruch 11, **dadurch gekennzeichnet, dass** das Ultraschalldurchflussmessgerät (1) nach einem der Ansprüche 1 bis 8 ausgebildet ist.
